# EUROPÄISCHE PATENTSCHRIFT

(11) **EP 3 403 776 B1**
(45) Veröffentlichungstag und Bekanntmachung des Hinweises auf die Patenterteilung: **18.01.2023**
(21) Anmeldenummer: 17001708.1
(22) Anmeldetag: 17.10.2017
(51) Int. Cl.: B26B 1/08, B60S 1/38, B26D 7/26, B26D 7/08, B26D 3/00, B26D 1/02, B26B 29/00, B26B 27/00, B26D 3/28, B26D 7/01

(54) **SCHEIBENWISCHERBLATT-NACHSCHNEIDEGERÄT**
WINDSCREEN WIPER BLADE CUTTING APPARATUS
APPAREIL D'ARASAGE DE BALAI D'ESSUIE-GLACE

(30) Priorität: 19.05.2017 DE 202017002690 U
(43) Veröffentlichungstag der Anmeldung: 21.11.2018
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- EP-B1- 2 580 032
- WO-A1-2004/028761
- JP-A- 2006 174 980
- US-A- 5 123 764
- US-A- 5 848 471

## Beschreibung

Die Erfindung betrifft ein Gerät zum Nachschneiden von Scheibenwischerblättern, wenn die Wischerblattkante veschlissen ist, um durch das Nachschneiden wieder eine saubere Wischerblattkante zu schaffen, die ein schlierenfreies Wischen von Autoscheiben ermöglichen.

Aus dem EP 2 580 032 B1 ist bereits ein Werkzeug zum Nachschneiden abgenutzter Wischerblätter für Scheibenwischer bekannt, das einen Führungsblock mit mindestens zwei parallelen und seitlich beabstandeten Führungsschlitzen aufweist, deren lichtes Querschnittprofil dem Querschnittprofil eines Wischerblatts entspricht, wobei die Führungsschlitze jeweils beiderseitige Führungsleisten aufweisen, die in die rückwärtigen beiderseitigen Quernuten des Wischerblatts eingreifen. Die Führungsleisten der mindestens zwei nebeneinander angeordneten Führungsschlitze haben einen unterschiedlichen Abstand zu einem im Profilspitzenbereich des Profilquerschnitts angeordneten Messerblatt, das zum Nachschneiden der Wischerkante dient, so dass ein Wischerblatt mindestens zweimal nachgeschnitten werden kann.

Aufgrund der Anordnung der Führungsschlitze nebeneinander ist der Führungsblock des Werkzeugs entsprechend breit und seine Führung entlang des Wischerblatts ist etwas schwierig, weil das Wischerblatt, wenn nicht gerade bei einer dem dortigen Ausführungsbeispiel entsprechenden Ausführungsform mit drei Führungsschlitzen der mittlere Führungsschlitz benutzt werden kann, das Wischerblatt sich stets außermittig zur Bewegungsachse des Werkzeugs befindet und deshalb wegen der außermittig wirkenden Schubkraft beim Schneiden stets eine Neigung zum Verkanten besteht.

Weiter ist aus der US 5 848 471 ein Gerät zum Nachschneiden von Scheibenwischerblättern bekannt, dass einen Basiskörper mit einem unten eingeformten und dem Querschnittsprofil des Wischerblatts angepassten Führungsschlitz und eine Messerträgeranordnung aufweist. Die Messerträgeranordnung weist einen in einer oberen Quernut des Basiskörpers quer verschiebbaren Führungskörper auf, in welchem ein Messerblock mit einem daran angebrachten Schneidmesser in einer schräg seitwärts und aufwärts verlaufenden Führung angeordnet ist. Das Schneidmesser hat eine stets parallel zur Quernut des Basiskörpers und somit quer zum Führungsschlitz für das Wischerblatt verlaufende Schneide. Durch Querverschieben der Messerträgeranordnung in der Quernut des Basiskörpers können unterschiedliche Bereiche der Schneide zum Einsatz gebracht werden, und durch Verschieben des Messerblocks in der schräg seitwärts und aufwärts verlaufenden Führung kann die Höhenposition der Schneide des Schneidmessers relativ zum Wischerblatt verändert werden.

Aus der WO 2004/028 761 A1 ist ein Gerät zum Nachschneiden eines Wischerblatts bekannt, das einen als Griff dienenden Grundkörper aufweist, in welchem ein Führungsschlitz mit Führungsleisten für das Wischerblatt gebildet ist, und in welchem ein Messerblock einem schräg gestellten Schneidmesser mittels einer Einstellvorrichtung mit einem Einstellrad und einer Gewindespindel senkrecht zum Führungsschlitz verstellbar ist, um den Abstand des Schneidmessers zum Führungsschlitz zu verändern. Aufgabe der Erfindung ist es, ein handliches, kleines und das nachzuschneidende Wischerblatt stets mittig aufnehmendes Nachschneidegerät zu schaffen, das ebenfalls ein mindestens zweimaliges Nachschneiden des Wischerblatts ermöglicht.

Diese Aufgabe wird erfindungsgemäß durch das im Anspruch 1 angegebene Nachschneidegerät gelöst. Vorteilhafte Ausgestaltungen der Erfindung sind Gegenstand der Unteransprüche.

Das erfindungsgemäße Nachschneidegerät hat nur einen einzigen Führungsschlitz zur Aufnahme des Wischerblattprofils und kann damit insgesamt eine entsprechend geringe Breite haben. Das nachzuschneidende Wischerblatt befindet sich, quer zur Bewegungsrichtung beim Nachschneiden gesehen, stets mittig im Nachschneidegerät. Das Schneidmesser ist an einem im Gerät zwischen mindestens zwei Positionen quer verstellbaren Messerblock angeordnet, der in einem in einem Gehäuse gebildeten Querschacht angeordnet und quer verschiebbar ist, um dadurch zwischen mindestens zwei Positionen mit unterschiedlichem Abstand des Schneidmessers zu den Führungsleisten des Führungsschlitzes beim jeweiligen Schneidvorgang verstellbar zu sein. Vorzugsweise ist der Messerblock in den mindestens zwei vorgesehenen Positionen rastbar. Es kann aber auch eine stufenlose Einstellbarkeit beispielsweise mittels einer Stellschraube vorgesehen sein.

Ein Ausführungsbeispiel der Erfindung wird nachstehend unter Bezugnahme auf die anliegenden Zeichnungen mehr im einzelnen beschrieben. In den Zeichnungen zeigt:
- Fig. 1: das Nachschneidegerät in perspektivischer Ansicht von außen beim Schneiden eines Wischerblatts,
- Fig. 2: eine Frontansicht des Nachschneidegeräts mit einem nachgeschnittenen Wischerblatt,
- Fig. 3: einen Querschnitt durch das Nachschneidegerät ohne Wischerblatt,
- Fig. 4: einen schräg von hinten gesehenen Querschnitt durch das Nachschneidegerät in kopfstehender Position,
- die Fig. 5 und 6: Horizontalschnitte durch das Nachschneidegerät, von unten gesehen, wobei in Fig. 5 der Messerblock sich in der einen und in Fig. 6 in der anderen der beiden beim Ausführungsbeispiel vorgesehenen Schneidpositionen befindet, und
- die Fig. 7 und 8: perspektivische Querschnitte durch das Nachschneidegerät, jeweils von schräg hinten gesehen, wobei der ebenfalls geschnittene Messerblock wiederum in der einen bzw. in der anderen der beiden möglichen Positionen dargestellt ist.

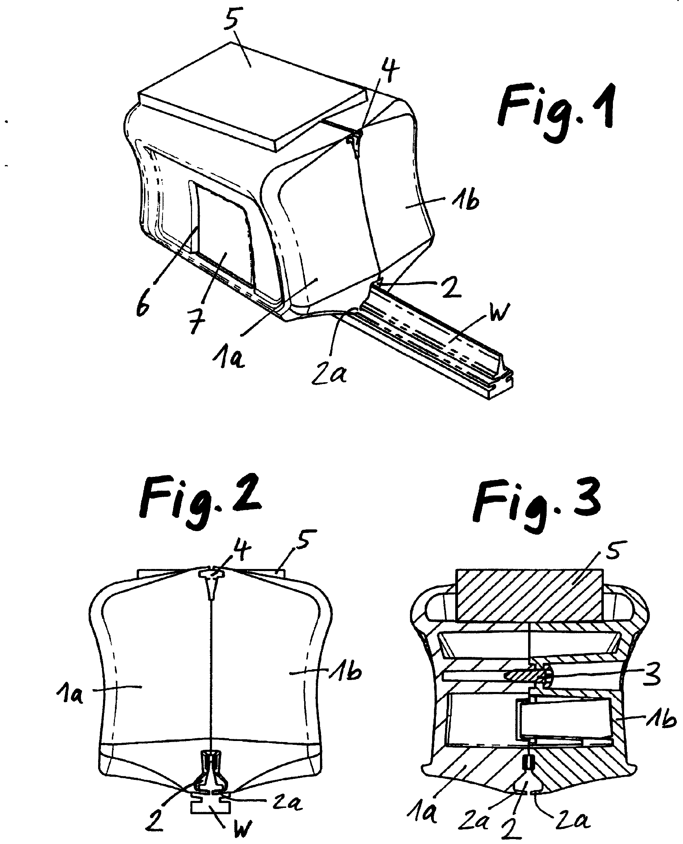

Figur 1 zeigt in perspektivischer Ansicht das Nachschneidegerät nach der Erfindung, schräg von vorn gesehen, beim Schneiden eines Wischerblatts W. Das Nachschneidegerät hat ein Gehäuse 1, das aus zwei seitlichen Gehäusehälften 1a und 1b längs einer in der Längsmittelebene verlaufenden Trennebene zusammengesetzt ist. Durch die aus Figur 1 deutlich ersichtlichen, etwas konkav eingewölbten Seitenflächen des Gehäuses 1 ist das Nachschneidegerät sehr griffgünstig und damit handhabungsfreundlich.

Mittig unten im Gehäuse ist ein Führungsschlitz 2 gebildet, die dem Querschnittsprofil des Wischerblatts W angepasst ist. Man erkennt diesen Führungsschlitz 2 deutlicher in den Figuren 2 und 3, von denen Figur 2 eine Frontansicht des Nachschneidegeräts mit dem Wischerblatt W zeigt, so dass erkennbar ist, wie der Führungsschlitz 2 das Wischerblatt aufnimmt und mit beiderseitigen Führungsleisten 2a in die beiderseitigen Quernuten des Wischerblatts W eingreift. Fig. 3 zeigt einen Querschnitt durch das Nachschneidegerät, ebenfalls von vorn gesehen, wo die beiden Gehäusehälften 1a und 1b und deren Verbindung durch Schrauben 3 erkennbar sind.

Mittig oben ist im vorderen Bereich des Nachschneidegeräts eine Reinigungsnut 4 gebildet, und dahinter ist in der Oberseite des Gehäuses 1 eine rechteckige Wanne eingeformt, in der ein Schwamm 5 leicht klemmend eingesetzt ist, so dass er leicht herausgenommen werden kann. Vor dem Nachschneiden eines Wischerblatts wird dieses durch die Reinigungsnut 4 hindurchgezogen, um Schmutzanhaftungen vom Wischerblatt abzustreifen, und mit dem Schwamm 5 kann insbesondere die Basis des Wischerblatts gesäubert werden.

Weiter erkennt man in der perspektivischen Ansicht nach Figur 1 einen Querschacht 6 im Gehäuse 1, in welchem ein Messerblock 7 quer verschiebbar angeordnet ist.

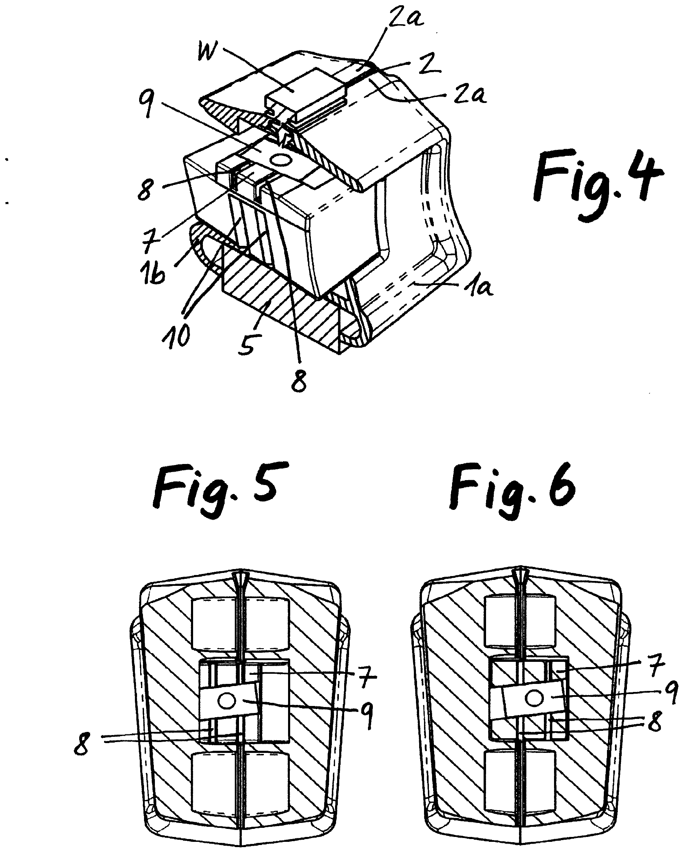

Figur 4 zeigt einen perspektivischen Querschnitt durch das kopfstehend abgebildete Nachschneidegerät, und zwar schräg von hinten gesehen, wobei die Schnittebene durch den Querschacht 6 verläuft und den darin befindlichen, nicht geschnitten dargestellten Messerblock 7 erkennen lässt. Der in einer oberseitigen Gehäusewanne befindliche Schwamm 5 befindet sich in dieser Darstellung also unten, und das Wischerblatt W ist oben im Führungsschlitz 2.

Der quer verschiebbare Messerblock 7 ist beim Ausführungsbeispiel zwischen zwei definierten seitlichen Positionen vorgesehen. Er hat daher an seiner Unterseite, die sich in Figur 4 oben befindet, zwei parallele Nuten 8, von denen in der einen Position des Messerblocks 7 die eine Nut 8 und in der anderen Position des Messerblocks 7 die andere Nut 8 mit dem Führungsschlitz 2 fluchtet, so dass die Wischerblattspitze darin eintauchen kann. An der in Figur 4 oben liegenden Unterseite des Messerblocks 7 ist sowohl bezüglich der

Querrichtung als auch bezüglich der Höhenrichtung etwas schräg verlaufend ein Messerblatt 9 angeordnet, das vorzugsweise durch Ultraschallschweißung mit dem Messerblock verbunden ist. Befindet sich der Messerblock 7 in seiner in Figur 4 dargestellten Position, ist der mit der Wischerblattspitze zusammenwirkende Schneidenbereich des Messerblatts 9 um eine geringere Distanz von den Führungsleisten des Führungsschlitzes 2 entfernt, als in der aus dieser Position etwas nach rechts verschobenen anderen Position des Messerblocks 7, wo diese Distanz etwas größer ist. Durch die in den beiden beim Ausführungsbeispiel vorgesehenen Messerblockpositionen ist also ein zweimaliges Nachschneiden eines Wischerblatts möglich.

Abweichend vom dargestellten Ausführungsbeispiel können auch drei verschiedene Positionen des Messerblocks 7 für ein dreimaliges Nachschneiden vorgesehen sein.

Beim Ausführungsbeispiel ist vorgesehen, dass der Messerblock 7 zwischen zwei definierten Positionen verschiebbar ist. Um eine definierte Positionierung in jeder dieser beiden Positionen zu gewährleisten, hat der Messerblock, wie in Figur 4 ersichtlich, zwei vertikal verlaufende Kerben 10, die mit einer im Gehäuse gebildeten Rastnase oder Rastleiste zusammenwirken, so dass der Messerblock 7 in jeder der beiden möglichen Positionen einrastet.

Die Figuren 5 und 6 zeigen von unten gesehene Horizontalschnitte durch das Nachschneidegerät, also mit Blick auf die Unterseite des Messerblocks 7, so dass die Nuten 8 im Messerblock und das an dessen Unterseite angeordnete Messerblatt 9 klar erkennbar sind. Dabei zeigen die Figuren 5 und 6 die eine und die andere der beiden möglichen Positionen des Messerblocks 7.

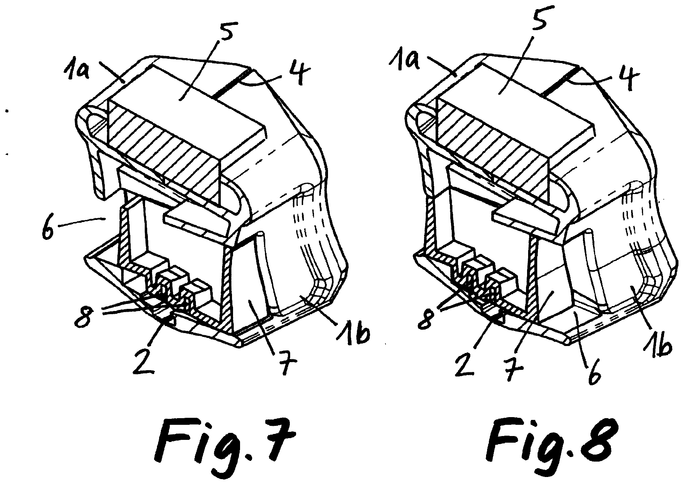

Die Figuren 7 und 8 zeigen jeweils schräg von hinten gesehene Querschnitte des Nachschneidegeräts ähnlich Figur 4, aber nicht in der kopfstehenden Position, sondern in der lagerichtigen Position des Nachschneidegeräts mit dem unten befindlichen Führungsschlitz 2, wobei in den Figuren 7 und 8 auch der Messerblock jeweils geschnitten dargestellt ist.

Abweichend vom dargestellten Ausführungsbeispiel mit rastbaren Positionen des Messerblocks kann der Messerblock auch stufenlos verschiebbar im Querschacht 6 angeordnet sein, beispielsweise in dem eine im Messerblock fixierte Schraubenmutter mit einer drehbar, aber axial festgelegten Schraube im Gehäuse zusammenwirkt. Es können darüber hinaus auch andere konstruktive Varianten einer stufigen oder stufenlosen Verschiebbarkeit des Messerblocks im Querschacht vorgesehen sein.

## Patentansprüche

1. Nachschneidegerät für Scheibenwischerblätter, mit:
einem Gehäuse (1),
einem in dem Gehäuse (1) angeordneten, dem Querschnittsprofil des Wischerblatts (W) angepassten Führungsschlitz (2) mit Führungsleisten (2a), die in seitliche Nuten der Wischerblattbasis eingreifen,
einem in dem Gehäuse (1) angeordneten Messerblock (7), der zwischen mindestens zwei Positionen verschiebbar ist,
und mit einem am Messerblock (7) in schräger Position angeordneten, in definiertem Abstand zu den Führungsleisten gehaltenen Schneidmesser (9) zum Nachschneiden der Wischerblattkante,
**dadurch gekennzeichnet, dass**
in dem Gehäuse (1) ein Querschacht (6) gebildet ist,
der Messerblock (7) in dem Querschacht (6) zwischen den mindestens zwei Positionen quer verschiebbar angeordnet ist,
wobei in den mindestens zwei Positionen des Messerblocks (7) mit dem daran in schräger Position angeordneten Schneidmesser (9) der Abstand zwischen den Führungsleisten (2a) und dem jeweils im Führungsschlitzbereich befindlichen Schneidenbereich des Schneidmessers (9) unterschiedlich groß ist.

2. Nachschneidegerät nach Anspruch 1, wobei das Schneidmesser (9) sowohl bezüglich der Querrichtung als auch bezüglich der Höhenrichtung schräg verlaufend am Messerblock (7) angeordnet ist.

3. Nachschneidegerät nach Anspruch 1 oder 2, wobei der Messerblock (7) in seinen mindestens zwei Positionen rastbar ist.

4. Nachschneidegerät nach Anspruch 1 oder 2, wobei der Messerblock (7) mittels eines Schraubspindeltriebs stufenlos quer verschiebbar im Gehäuse (1) angeordnet ist.

5. Nachschneidegerät nach einem der Ansprüche 1 bis 4, wobei im Gehäuse (1) zusätzlich zum Führungsschlitz (2) ein Reinigungsschlitz (4) gebildet ist, durch welchen das Wischerblatt (W) zum Abstreifen von Schmutzanhaftungen hindurchgeführt werden kann.

6. Nachschneidegerät nach Anspruch 5, wobei der Reinigungsschlitz (4) gegenüber dem Führungsschlitz (2) an der Gehäuseoberseite angeordnet ist.

7. Nachschneidegerät nach einem der Ansprüche 1 bis 6, wobei an der Gehäuseoberseite eine Mulde zum Einsetzen eines Schwämmchens (5) gebildet ist.

## Claims

1. A re-cutting tool for screen wiper blades, with:
a housing (1),
a guiding slot (2) arranged in the housing (1) and adapted to the cross-sectional profile of the wiper blade (W), the guiding slot having guiding ledges (2a) that engage in lateral grooves in the base of the wiper blade,
a knife block (7) that is arranged in the housing (1) and is displaceable between at least two positions,
and with a cutting knife (9) for re-cutting the wiper blade edge, arranged on the knife block (7) in oblique position and maintained in a defined distance from the guiding ledges,
**characterised in that**
a transversal duct (6) is formed in the housing (1),
the knife block (7) is arranged in the transversal duct (6) so as to be transversally displaceable between the at least two positions,
wherein the distance between the guiding ledges (2a) and the cutting edge region of the cutting knife (9) respectively located in the guiding slot region has a different size in the at least two positions of the knife block (7), with the cutting knife (9) arranged thereon in oblique position.

2. The re-cutting tool according to claim 1, wherein the cutting knife (9) is arranged on the knife block (7) in an oblique manner relative to both the cross direction and the height direction.

3. The re-cutting tool according to claim 1 or 2, wherein the knife block (7) can be latched in its at least two positions.

4. The re-cutting tool according to claim 1 or 2, wherein the knife block (7) is arranged in the housing (1) so as to be transversally displaceable in a continuous manner by means of a screw spindle drive.

5. The re-cutting tool according to any one of claims 1 to 4, wherein in addition to the guiding slot (2) a cleaning slot (4) is formed in the housing (1) through which the wiper blade (W) can be passed to scrape off dirt adhesions.

6. The re-cutting tool according to claim 5, wherein the cleaning slot (4) is arranged opposite the guiding slot (2) on the upper side of the housing.

7. The re-cutting tool according to any one of claims 1 to 6, wherein a trough for inserting a small sponge (5) is formed on the upper side of the housing.

## Revendications

1. Dispositif de retaillage pour balais d'essuie-glace, avec :
un boîtier (1),
une fente de guidage (2) arrangée dans le boîtier (1) et adaptée au profil de section transversale du balai d'essuie-glace (W), avec des barres de guidage (2a) s'engageant dans des rainures latérales de la base du balai d'essuie-glace,
une barre porte-lame (7) arrangée dans le boîtier (1) et déplaçable entre au moins deux positions,
et avec un couteau (9) pour le retaillage du bord de balai d'essuie-glace, le couteau étant arrangé dans une position oblique sur la barre porte-lame (7) et maintenu à une distance définie des barres de guidage,
**caractérisé en ce qu'**un conduit transversale (6) est formé dans le boîtier (1),
la barre porte-lame (7) est arrangée dans le conduit transversale (6) de manière déplaçable transversalement entre les au moins deux positions,
dans lequel la distance entre les barres de guidage (2a) et la région de la lame du couteau (9) respectivement située dans la région de fente de guidage a une taille différente dans les au moins deux positions de la barre porte-lame (7) avec le couteau (9) arrangée sur celle-ci,.

2. Dispositif de retaillage selon la revendication 1, dans lequel le couteau (9) est arrangée sur la barre porte-lame (7) à extension oblique soit par rapport à la direction transversale soit par rapport à la direction de la hauteur.

3. Dispositif de retaillage selon la revendication 1 ou 2, dans lequel la barre porte-lame (7) est encliquetable dans ses au moins deux positions.

4. Dispositif de retaillage selon la revendication 1 ou 2, dans lequel la barre porte-lame (7) est arrangée dans le boîtier (1) de manière déplaçable transversalement en continu au moyen d'un entraînement à vis.

5. Dispositif de retaillage selon l'une quelconque des revendications 1 à 4, dans lequel, en plus de la fente de guidage (2), une fente de nettoyage (4) est formée dans le boîtier (1), à travers laquelle le balai d'essuie-glace (W) peut être guidé pour racler des résidus de saleté adhérants.

6. Dispositif de retaillage selon la revendication 5, dans lequel la fente de nettoyage (4) est arrangée à l'opposé de la fente de guidage (2) sur la face supérieure du boîtier.

7. Dispositif de retaillage selon l'une des revendications 1 à 6, dans lequel une cavité est formée sur la face supérieure du boîtier pour l'insertion d'une petite éponge (5).
